# EUROPÄISCHE PATENTSCHRIFT

(11) **EP 1 164 304 B1**
(45) Veröffentlichungstag und Bekanntmachung des Hinweises auf die Patenterteilung: **03.12.2003**
(21) Anmeldenummer: 01890186.8
(22) Anmeldetag: 13.06.2001
(51) Int. Cl.: F16D 3/56

(54) **Drehelastische Kupplung**
Torsional elastic coupling
Accouplement torsio-élastique

(30) Priorität: 15.06.2000 AT 10302000
(43) Veröffentlichungstag der Anmeldung: 19.12.2001
(73) Patentinhaber: Ellergon Antriebstechnik GmbH, 5300 Hallwang/Salzburg (AT)
(72) Erfinder: Geislinger, Matthias, Dipl. Ing., 5026 Salzburg (AT)
(74) Vertreter: Hübscher, Helmut, Dipl.-Ing.

(56) Entgegenhaltungen:
- EP-A- 0 551 552
- AT-B- 402 758
- US-A- 5 211 606

## Beschreibung

Die Erfindung bezieht sich auf eine drehelastische Kupplung mit einer Mehrzahl über den Umfang verteilter, radial ausbaubarer Federn zur Drehmomentenübertragung zwischen einer Nabe und einem Außenkranz, wobei die Federn aus einem zumindest einmal um eine zur Kupplungsdrehachse parallele Krümmungsachse gekrümmten, endseitig Anschlußteile zur Naben- bzw. Außenkranzbefestigung aufweisenden Faserverbundkörper bestehen.

Derartige Kupplungen gestatten Relativbewegungen zwischen An- und Abtriebselementen, wie axialen, radialen und winkeligen Versatz (EP 551 552 A2). Sie besitzen aber nur eine mangelhafte Dämpfung, was die Verwendung zusätzlicher Drehschwingungsdämpfer erfordert, um einen Antriebsstrang nicht unnötig mit Schwingungen zu belasten. US-A-5 211 606 offenbart auch eine gattungsgemäße Kupplung.

Andere bekannte Kupplungen sind bisher meist mit Stahlfedern ausgestattet, die aus einzelnen Federblättem oder als Federblattpakete unter Zwischenlage von Zwischenstücken innerhalb eines den Außenkranz bildenden bzw. dem Außenkranz zugehörenden Spannringes eingespannt werden und mit ihren freien Innenenden in Nuten der Nabe eingreifen. Dadurch kommt es zu einem entsprechenden Herstellungs- und Bauaufwand und die Kupplung ist kaum in der Lage, Radialverlagerungen der miteinander zu kuppelnden Teile auszugleichen. Auch eine Dämpfung der auftretenden Drehschwingungen fordert spezielle Maßnahmen, wie das Ausbilden flüssigkeitsbefüllbarer Dämpfungskammem zwischen den Federelementen und den die Federelemente festklemmenden Zwischenstücken, was den Konstruktionsaufwand der Kupplungen weiter erhöht.

Der Erfindung liegt daher die Aufgabe zugrunde, eine drehelastische Kupplung der eingangs geschilderten Art zu schaffen, die sich bei vergleichsweise einfachem Aufbau durch ihre Verlagerungsfähigkeit und ihre Dämpfungseigenschaften auszeichnet.

Die Erfindung löst diese Aufgabe dadurch, daß zwischen den Anschlußteilen im Faserverbundkörper wenigstens eine sich längserstreckende Elastomerschicht eingebettet ist. Diese Federn können mittels ihrer Anschlußteile einerseits an geeigneten Flanschringen der Nabe und anderseits an beliebig gestalteten Außenkränzen, seien es eigene Außenkränze oder als Außenkränze dienende Ringbereiche von Schwungrädern od. dgl. der anzukuppelnden Teile, festgeschraubt werden und bringen aufgrund der Materialeigenschaften des Faserverbundkörpers einerseits die gewünschte Drehelastizität und anderseits die Schwingungsdämpfung mit sich. Darüber hinaus erlauben sie ohne zusätzliche Maßnahmen den bekannten Ausgleich von axialen, radialen und winkeligen Achsverlagerungen der miteinander zu kuppelnden Teile. Es entsteht eine sehr einfache, platzsparende und rationell einbaubare Kupplung, deren Elastizitätsund Verlagerungsfähigkeit durch die Formgebung und den Faserverbundwerkstoff des Federkörpers beeinflußbar sind. Die in den Faserverbundkörper eingebettete Elastomerschicht wird bei einer Biegebewegung der Faserverbundkörper schubbeansprucht, so daß die dem Elastomer eigenen Dämpfungseigenschaften zur Schwingungsdämpfung nutzbar sind. Dabei läßt sich durch die Wahl des Elastomers, die Anzahl der Elastomerschichten und deren Verlauf die erreichbare Dämpfungscharakteristik gezielt beeinflussen.

Umfaßt der Faserverbundkörper zur mittigen Elastomerschicht symmetrisch angeordnete Faserverbundschichten unterschiedlicher Elastizitätseigenschaften, beispielsweise Glas- oder Kohlefaserverbundschichten, lassen sich die eingesetzten Faserverbundwerkstoffe hinsichtlich ihrer Materialeigenschaften optimal nutzen. Bei Biegung der Federn ergeben sich nämlich beidseits der mittigen Elastomerschicht im Bereich der Elastomerschicht und an den Außenseiten des Verbundkörpers jeweils Zonen hoher Druck- bzw. Zugbelastung, dazwischen hingegen annähernd neutrale Zonen, so daß für die neutralen Zonen Faserverbundschichten mit wenig elastischem Material, beispielsweise Kohlefaserkunststoff, und für die belasteten Zonen Faserverbundschichten mit höher elastischem Material, beispielsweise Glasfaserkunststoff, eingesetzt werden können. Damit sind dann durch entsprechende Auslegung der Schichtdicken Belastungsverhältnisse zu erreichen, die bei maximal erlaubter Biegung der Federn die maximal zulässige Spannung der Randfasern in den jeweiligen Faserverbundschichten mit sich bringt und damit eine Optimierung des Werkstoffeinsatzes erlaubt.

Um auf einfache Weise die axiale Verlagerungsfähigkeit der Kupplung zu erhöhen, kann der Faserverbundkörper im Bereich zwischen den Anschlußteilen wenigstens einen in einer Normalebene zur Kupplungsachse verlaufenden Schlitz aufweisen, wodurch die Beweglichkeit der Federn in Achsrichtung entsprechend gesteigert wird.

In der Zeichnung ist der Erfindungsgegenstand schematisch veranschaulicht, und zwar zeigen
- Fig. 1 und 2: eine erfindungsgemäße drehelastische Kupplung im achsnormalen Querschnitt nach der Linie I-I der Fig. 2 bzw. im Axialschnitt nach der Linie II-II der Fig. 1,
- Fig. 3: ein etwas abgeändertes Ausführungsbeispiel dieser Kupplung in einem Axialschnitt gemäß Fig. 2 und
- Fig. 4: den Aufbau einer Feder dieser Kupplung in einem achsnormalen Längsschnitt größeren Maßstabes.

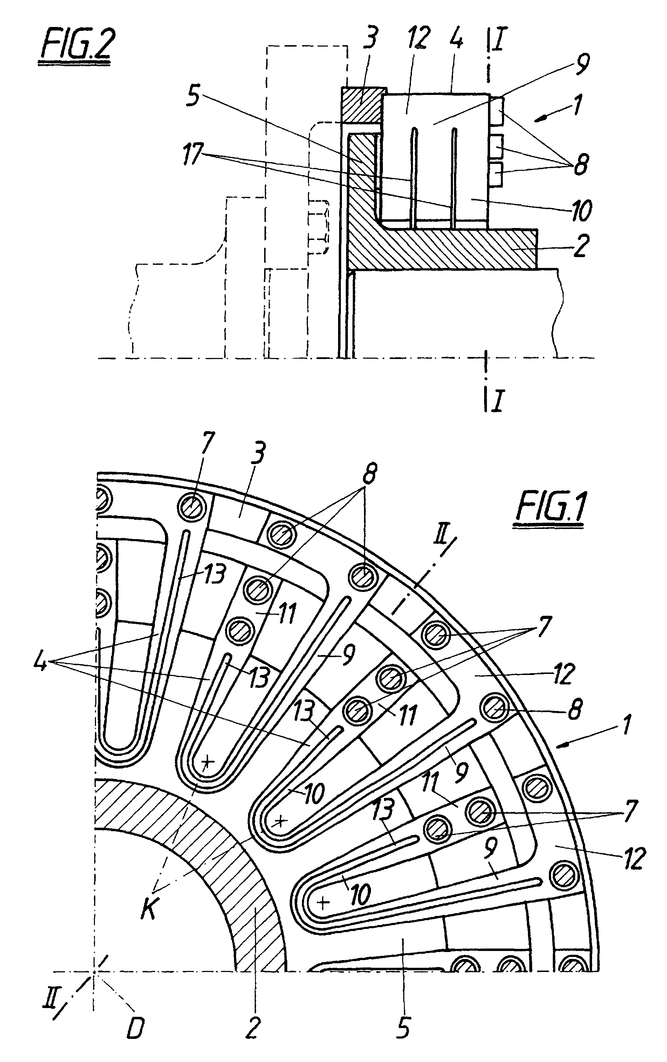

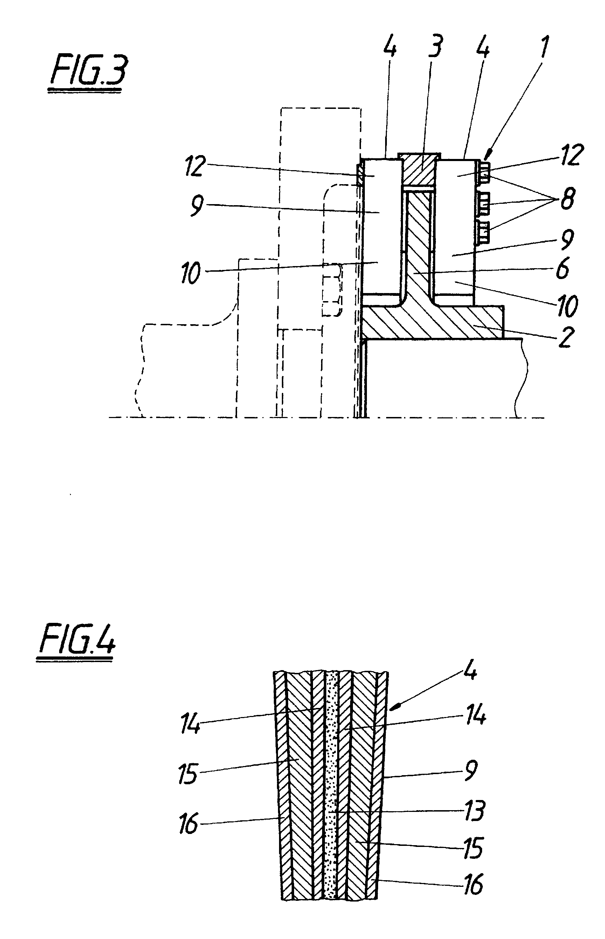

Eine drehelastische Kupplung 1 ist zur Drehmomentenübertragung zwischen einer Nabe 2 und einem Außenkranz 3 mit einer Mehrzahl über den Umfang verteilter, radial ausbaubarer Federn 4 ausgestattet, welche Federn einerseits an einem Endflansch 5 der Nabe 2 (Fig. 2) oder bei paarweiser Anordnung der Federn 4 an einem Ringflansch 6 der Nabe 2 (Fig. 3) und anderseits am Außenkranz 3 unter Einsatz von Stahlhülsen 7 und geeigneten Befestigungsschrauben 8 angeschraubt sind. Der Außenkranz 3 kann dabei ein eigener Kranzteil als Montagehilfe (Fig. 2 und 3), aber auch unmittelbar ein Ringbereich des zu kuppelnden Teiles, beispielsweise eines Schwungrades, sein.

Die Federn 4 bestehen aus einem Faserverbundkörper 9, der einen zumindest einmal um eine zur Kupplungsdrehachse D parallele Krümmungsachse K etwa U-förmig gekrümmten Mittelteil 10 und zwei endseitige Anschlußteile 11, 12 mit den Stahlhülsen 7 zur Naben- bzw. Außenkranzbefestigung bildet, wobei in den Mittelteil 10 wenigstens eine sich längserstreckende Elastomerschicht 13 eingebettet ist. Diese Federn 4 erlauben nicht nur eine entsprechende Drehmomentenübertragung zwischen Nabe 2 und Außenkranz 3, sondern sie bieten auch aufgrund ihrer Formgebung und ihres Faserverbundwerkstoffes eine axiale, radiale und winkelige Verlagerungsmöglichkeit und zusätzlich durch die Elastomerschicht 13 eine Schwingungsdämpfung.

Um die Federn hinsichtlich des verwendeten Faserverbundwerkstoffes zu optimieren, umfaßt der Faserverbundkörper 9 zur mittigen Elastomerschicht 13 symmetrisch angeordnete Faserverbundschichten 14, 15, 16 unterschiedlicher Elastizitätseigenschaften, wobei unmittelbar an die Elastomerschicht 13 die Faserverbundschichten 14 aus einem höher elastischen Material, beispielsweise Glasfaserverbundschichten, anschließen, dann mittlere Faserverbundschichten 15 aus einem weniger elastischen Material, beispielsweise Kohlefaserverbundschichten, folgen und an der Außenseite wiederum Faserverbundschichten 16 aus einem höher elastischen Material, beispielsweise Glasfaserverbundschichten, vorgesehen sind. Dadurch werden diese Faserverbundschichten an die jeweiligen Belastungsverhältnisse bei einer Federverbiegung angepaßt und in den neutralen Biegezonen die Faserverbundschichten 15 weniger elastischen Materials, in den spannungsintensiven Faserverbundschichten 14, 16 hingegen die Faserverbundschichten höheren elastischen Materials eingesetzt, so daß die Fasern der Schichten jeweils hinsichtlich ihrer Festigkeitseigenschaften voll genutzt werden können.

Um die axiale Verlagerungsfähigkeit der Kupplung zu erhöhen, können die Faserverbundkörper 9 der Federn 4 im Bereich des Mittelteiles 10 in einer Normalebene N zur Kupplungsdrehachse D verlaufende Schlitze 17 aufweisen, so daß sich die Federn 4 an einen axialen Versatz der zu kuppelnden Teile und damit an einen axialen Versatz zwischen Nabe 2 und Außenkranz 3 besser angleichen können.

## Patentansprüche

1. Drehelastische Kupplung (1) mit einer Mehrzahl über den Umfang verteilter, radial ausbaubarer Federn (4) zur Drehmomentenübertragung zwischen einer Nabe (2) und einem Außenkranz (3), wobei die Federn (4) aus einem zumindest einmal um eine zur Kupplungsdrehachse (D) parallele Krümmungsachse (K) gekrümmten, endseitig Anschlußteile (11, 12) zur Naben- bzw. Außenkranzbefestigung aufweisenden Faserverbundkörper (9) bestehen, **dadurch gekennzeichnet, daß** zwischen den Anschlußteilen (11, 12) im Faserverbundkörper (9) wenigstens eine sich längserstreckende Elastomerschicht (13) eingebettet ist.

2. Kupplung nach Anspruch 1, **dadurch gekennzeichnet, daß** der Faserverbundkörper (9) zur mittigen Elastomerschicht(13) symmetrisch angeordnete Faserverbundschichten (14, 15, 16) unterschiedlicher Elastizitätseigenschaften, beispielsweise Glas- oder Kohlefaserverbundschichten umfaßt.

3. Kupplung nach Anspruch 1 oder 2, **dadurch gekennzeichnet, daß** der Faserverbundkörper (9) im Bereich zwischen den Anschlußteilen (11, 12) wenigstens einen in einer Normalebene (N) zur Kupplungsdrehachse (D) verlaufenden Schlitz (17) aufweist.

## Claims

1. A torsionally elastic coupling (1) comprising a plurality of radially demountable springs (4) distributed over the periphery for transmitting torque between a hub (2) and an outer ring (3), the springs (4) consisting of a fibre composite member (9) which is curved at least once about a curvature axis (K) parallel to the rotational axis (D) of the coupling, and which has end connecting parts (11, 12) for fixing the hub and outer ring respectively, **characterised in that** at least one longitudinally extending elastomeric layer (13) is embedded between the connecting parts (11, 12) in the fibre composite member (9).

2. A coupling according to claim 1, **characterised in that** the fibre composite member (9) comprises fibre composite layers (14, 15, 16) having different elasticity properties, for example glass or carbon fibre composite layers, said layers being disposed symmetrically to the central elastomeric layer (13).

3. A coupling according to claim 1 or 2, **characterised in that** the fibre composite member (9) has, in the zone between the connecting parts (11, 12), a slot (17) extending in a perpendicular plane (N) to the coupling rotational axis (D).

## Revendications

1. Accouplement torsio-élastique (1) comportant une pluralité de ressorts (4) démontables radialement, répartis sur la périphérie pour assurer la transmission de couple entre un moyeu (2) et une couronne extérieure (3), les ressorts (4) étant formés d'un corps composite en fibres (9), ayant au moins une incurvation autour d'un axe d'incurvation (K) parallèle à l'axe de rotation d'accouplement (D), présentant des parties de raccordement (11, 12) du côté extrémité pour la fixation au moyeu ou à la couronne extérieure, **caractérisé en ce qu'**au moins une couche en élastomère (13) à étirement longitudinal est incorporée entre les parties de raccordement (11, 12) dans le corps composite en fibres (9).

2. Accouplement selon la revendication 1, **caractérisé en ce que** le corps composite en fibres (9) comprend des couches composites de fibres (14, 15, 16), disposées symétriquement par rapport à la couche en élastomère centrale (13) et ayant des propriétés d'élasticité différentes, par exemple des couches composites en fibres de verre ou de carbone.

3. Accouplement selon la revendication 1 ou 2, **caractérisé en ce que** le corps composite en fibres (9) présente, dans la zone se trouvant entre les parties de raccordement (11, 12), au moins une fente (17) s'étendant dans un plan normal (N) perpendiculaire à l'axe de rotation d'accouplement (D) .
